## Europäisches Patentamt
## European Patent Office
## Office européen des brevets

(19)

(11) Veröffentlichungsnummer: **0 203 266**
**B1**

(12)

# EUROPÄISCHE PATENTSCHRIFT

(45) Veröffentlichungstag der Patentschrift:
**02.11.88**

(21) Anmeldenummer: **86102157.4**

(22) Anmeldetag: **19.02.86**

(51) Int. Cl.⁴: **F 16 J 15/28**

(54) **Mehrteiliger Dichtring.**

(30) Priorität: **01.03.85 DE 3507272**

(43) Veröffentlichungstag der Anmeldung:
**03.12.86 Patentblatt 86/49**

(45) Bekanntmachung des Hinweises auf die Patenterteilung:
**02.11.88 Patentblatt 88/44**

(84) Benannte Vertragsstaaten:
**FR GB IT LU**

(56) Entgegenhaltungen:
**DE-C-444 696**
**US-A-1 819 559**

(73) Patentinhaber: **Gustav Espey GmbH & Co. KG.,**
**Vulkanstrasse 26, D-4100 Duisburg 1 (DE)**

(72) Erfinder: **Kemper, Wolfgang, Bonertstrasse 46,**
**D-4100 Duisburg 46 (DE)**

(74) Vertreter: **Bergen, Klaus, Dipl.- Ing.,**
**Patentanwälte Dr.- Ing. Reimar König Dipl.- Ing.**
**Klaus Bergen Wilhelm- Tell- Strasse 14 Postfach**
**260162, D-4000 Düsseldorf 1 (DE)**

EP 0 203 266 B1

## Beschreibung

Die Erfindung betrifft einen mehrteiligen, insbesondere von einer Schlauchfeder umspannten Dichtring, der in Stirnseiten von Ringsegmenten eingesetzte und in Vertiefungen von Stirnseiten angrenzender Ringsegmente eingreifende Rastelemente aufweist. Derartige Dichtringe lassen sich zum Dichten drehender Teile, wie Wellen, einsetzten.

Ein mehrteiliger Dichtring dieser Art ist durch die DE-C-444 696 bekanntgeworden. Die Stirnseiten der Ringsegmente dieses bekannten Dichtringes greifen mit Nut und Feder ineinander; die Ringsegmente werden außerdem durch Paßstifte zusammengehalten. Der Zusammenhalt der Ringsegmente durch die Paßstifte ist allerdings nicht auf Dauer angelegt, denn im Betriebszustand sollen die Paßstifte schmelzen; die Ringsegmente sollen sich danach frei bewegen können.

Es ist bekannt, derartige mehrteilige Dichtungen in Ringnuten bzw. Kammern von Gehäusen anzuordnen, wobei jede Kammer mit einem mehrteiligen, von einer Schlauchfeder umspannten Dichtring bestückt wird. Die Dichtringe sind in den Kammern bzw. Nuten beweglich gelagert und gegen Verdrehen geschichert. Besonders bei Dichtringen mit großen Durchmessern, beispielsweise 1000 mm, die aus einer Vielzahl von Segmenten zusammengesetzt sind, läßt sich beim Zusammenbau der Dichtung, beim Lagern, beim Transport und beim Einbau in die Maschine bzw. in die Anlage häufig nicht vermeiden, daß die Dichtringe, solange sie in der Bohrung nicht gestützt werden, wie beispielsweise durch eine Welle, nach innen zusammenfallen. Der Grund liegt darin, daß die mehrfach radial geteilten Dichtringe sehr instabile, durch äußere Einwirkungen leicht zu beeinflussende Gebilde darstellen; die Segmente können beim Zusammenfallen beschädigt oder sogar völlig zerstört werden.

Der Erfindung liegt die Aufgabe zugrunde, einen in einem Gehäuse angeordneten, mehrteiligen, d. h. aus einzelnen Segmenten zusammengestzten Dichtring zu schaffen, der bzw. dessen einzelne Segmente sich nich unerwünscht verschieben bzw. zusammenfallen, auch wenn sie in der Bohrung nicht geführt bzw. gestützt werden.

Erfindungsgemäß wird diese Aufgabe dadurch gelöst, daß bei einem in eine Ringnut bzw. Kammer eines Gehäuses eingesetzten und zur Lagesicherung mit einem Arretierstück in einer Aufnahme des Gehäuses geführten Dichtring das in eine axiale Ausnehmung eines Ringsegmentes eingesetzte Arretierstück mit einem Bolzen in eine axiale Längsnut des Gehäuses eingreift. Ein mehrteiliger Dichtring läßt sich damit nicht mehr so weit radial verschieben, daß das Arretierstück aus der Aufnahme in dem Gehäuse herausrutscht. Die radialen Verschiebebewegungen des in einer Gehäuse-Eindrehung gelagerten Dichtrings lassen sich auf diese Weise auch dann durch das gezielte Führen des Bolzens in der schlitzartigen Längsnut des Gehäuses begrenzen, wenn der Dichtring nicht von der abzudichtenden Welle gestützt und geführt wird. Der mehrteilige Dichtring kann sich damit nicht mehr völlig aus seinem Sitz in der Ringnut bzw. Kammer des Gehäuses herausbewegen, womit Beschädigungen der Ringsegmente oder auch das völlige Zerstören des Dichtringes ausgeschlossen sind. Bei mehreren in einem Gehäuse angeordneten Dichtringen wird jeder Dichtring entsprechend gesichert.

Die Erfindung wird nachfolgend anhang der in der Zeichnung dargestellten Ausführungsbeispiele näher erläutert. Es zeigen:

Fig. 1   einen aus mehreren Ringsegmenten zusammengestezten Dichtring, in der Seitenansicht;

Fig. 2   eine Einzelheit des Gegenstandes gemäß Fig. 1 im Bereich zweier angrenzender Ringsegmente, teilweise geschnitten;

Fig. 3   einen in ein Gehäuse eingesetzten und darin mittels eines Arretierstücks lagesicher gehaltenen mehrteiligen Dichtring, in der Seitenansicht und teilweise geschnitten; und

Fig. 4   eine Einzelheit des Gegenstandes gemäß Fig. 3 entlang der Linie IV - IV geschnitten.

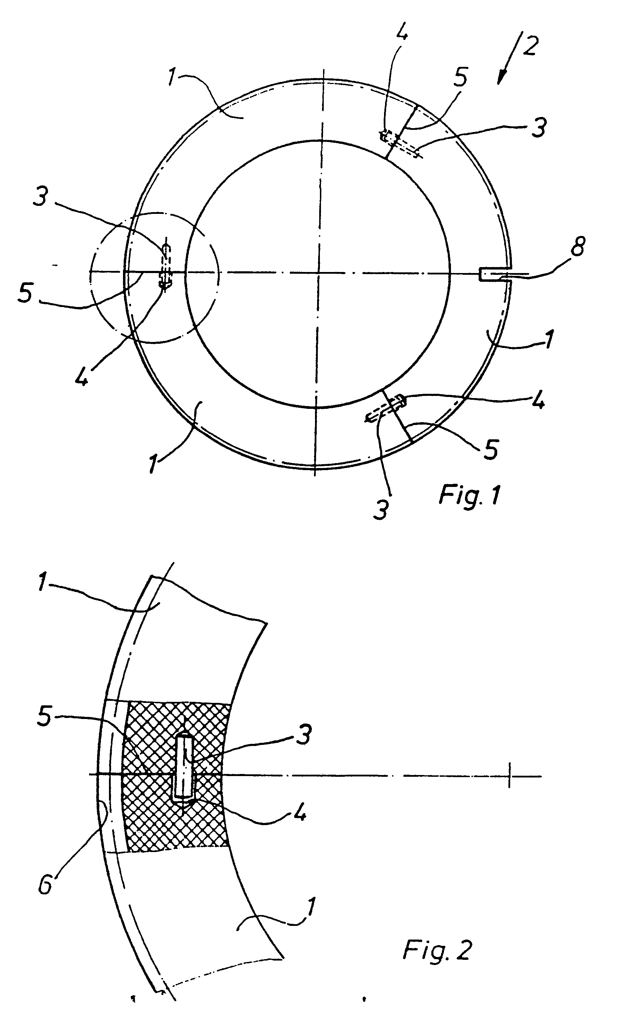

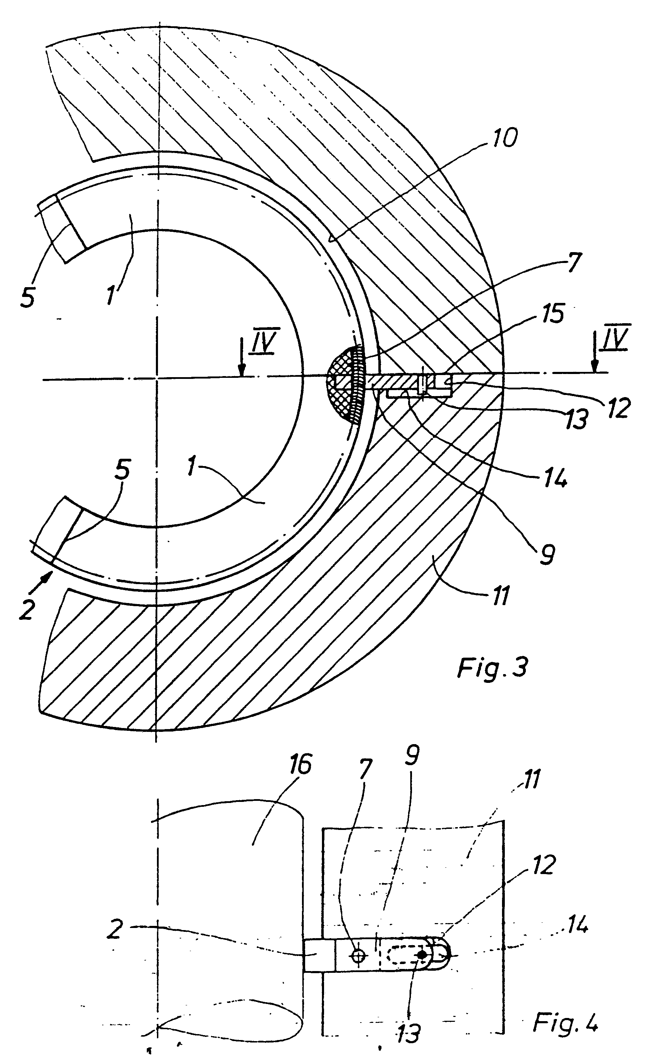

Jedes Ringsegment 1 eines mehrteiligen, gemäß Fig. 1 aus drei Ringsegmenten 1 zusammengesetzten Dichtringes 2, weist an einem Stirnende einen Stift 3 und an dem anderen Stirnende eine gegenüber dem Stift 3 im Durchmesser größere Bohrung 4 auf. Beim Zusammensetzen des Dichtringes 2 rastet in jeder radialen Teilfuge 5 der Stift 3 eines Ringsegmentes in die Bohrung 4 des angrenzenden Ringsegmentes ein und verhindert ein Zusammenfallen der Ringsegmente 1 nach innen. Der Dichtring 2 wird von einer in einer umlaufenden Nut 6 angeordneten Schlauchfeder 7 umspannt (Fig. 3) und besitzt in einem Ringsegment 1 eine axiale Ausnehmung 8 für ein darin eingesetztes Arretierstück 9.

Das gemäß Fig. 3 in die axiale Ausnehmung 8 des Dichtringes 2 eingesetzte und durch die Schlauchfeder 7 aufgefädelte und damit gehaltene Arretierstück 9, greift beim Einbau des Dichtringes in eine Ringnut bzw. Kammer 10 eines vorzugsweise zweigeteilten Gehäuses 11 in eine Aufnahme 12 des Gehäuses 11 ein.

Damit sich das Arretierstück 9 in der Aufnahme 12 zwar sowohl axial als auch radial bewegen, nicht aber vollends aus der Aufnahme 12 heraustreten kann, ragt das Arretierstück 9 mit einem Bolzen 13 in eine unterhalb der Aufnahme 12 angeordnete, schlitzartige, axiale Längsnut 14 des Gehäuses 11. Bei der Ausführung gemäß den Fig. 3 und 4 befinden sich die Aufnahme 12 und die Längsnut 14 unmittelbar im Bereich der Trennfuge 15 im unteren Gehäuseteil des zweigeteilten Gehäuses 11. Die Endlagen der axialen Längsnut 14 begrenzen die Bewegungsräume des Arretierstückes 9 und verhindern, daß der Dichtring 2 aus dem Gehäuse 11 heraustritt. Diese Gefahr besteht nicht mehr, wenn der Dichtring 2 entsprechend seiner bestimmungsgemäßen Funktion eine ihn dann stützende Welle 16 umschließt; das Arretierstück 9 verhindert dann, daß der Dichtring 2 mit der abzudichtenden Welle 16 umläuft.

## Patentanspruch

Mehrteiliger, insbesondere von einer Schlauchfeder (7) umspannter Dichtring (2), der in Stirnseiten von Ringsegmenten (1) eingesetzte und in Vertiefungen (4) von Stirnseiten angrenzender Ringsegmente (1) eingreifende Rastelemente (3) aufweist, dadurch gekennzeichnet, daß bei einem in eine Ringnut bzw. Kammer (10) eines Gehäuses (11) eingesetzten und zur Lagesicherung mit einem Arretierstück (9) in einer Aufnahme (12) des Gehäuses (11) geführten Dichtring (2) das in eine axiale Ausnehmung (8) eines Ringsegmentes (1) eingestezte Arretierstück (9) mit einem Bolzen (13) in eine axiale Längsnut (14) des Gehäuses (11) eingreift.

## Claim

A multipart sealing ring (2), in particular one surrounded by a helical spring (7), having locking elements (3) inserted into end faces of ring segments (1) and engaging in recesses (4) in end faces of adjoining ring segments (1), characterised In that in the case of a sealing ring (2) inserted Into an annular groove or chamber (10) in a housing (11) and having a locking piece (9) guided in a recess (12) in the housing (11) to hold it in position, the locking piece (9) inserted into an axial recess (8) in a ring segment (1) engages with a pin (13) into an axial longitudinal groove (14) in the housing (11)

## Revendication

Bague d'étanchéité (2) à plusieurs parties, notamment entouree et serrée par un ressort en boudin (7), qui comporte, sur des faces frontales de segments annulaires (1), des éléments d'arrêt (3) s'engageant dans des encoches (4) pratiquées dans des faces frontales de segments annulaires adjacents (1), caractérisee en ce que, dans le cas d'une bague d'étanchéité (2) logée dans une rainure annulaire ou chambre annulaire (10) d'un carter (11) et guidée à l'aide d'une pièce d'arrêt (9) dans un évidement (12) du carter (11), en vue du positionnement, la pièce d'arrêt (9) logée dans un évidement axial (8) d'un segment annulaire (1) s'engage, via une cheville (13), dans une rainure axiale droite (14) du carter (11).

Fig. 1

Fig. 2

Fig. 3

Fig. 4